**Europäisches Patentamt**

**European Patent Office**

**Office européen des brevets**

(11) Veröffentlichungsnummer: **0 224 702**
**B1**

(12) **EUROPÄISCHE PATENTSCHRIFT**

(45) Veröffentlichungstag der Patentschrift: **08.08.90**

(51) Int. Cl.⁵: **B 29 C 67/18**

(21) Anmeldenummer: **86114572.0**

(22) Anmeldetag: **21.10.86**

(54) **Kunststoff-Formstoff mit angeformten oder eingeformten gummielastischen Teilen.**

(30) Priorität: **26.11.85 DE 3541767**

(43) Veröffentlichungstag der Anmeldung:
**10.06.87 Patentblatt 87/24**

(45) Bekanntmachung des Hinweises auf die
Patenterteilung:
**08.08.90 Patentblatt 90/32**

(84) Benannte Vertragsstaaten:
**DE FR GB IT NL SE**

(56) Entgegenhaltungen:
**DE-A-2 127 227**
**FR-A-2 114 472**
**FR-A-2 171 455**
**FR-A-2 498 905**
**GB-A-1 165 971**

(73) Patentinhaber: **WOCO Franz-Josef Wolf & Co.**
**Sprudelallee 19**
**D-6483 Bad Soden-Salmünster (DE)**

(72) Erfinder: **Wolf, Franz-Josef**
**Sprudelallee 19**
**D-6483 Bad Soden-Salmünster (DE)**
Erfinder: **Kaminski, Peter**
**Am Rausch 16**
**D-6460 Gelnhausen 4 (Haitz) (DE)**

(74) Vertreter: **Jaeger, Klaus, Dr. et al**
**Patentanwälte JAEGER, LORENZ & KÖSTER**
**Pippinplatz 4a**
**D-8035 München-Gauting (DE)**

Courier Press, Leamington Spa, England.

## Beschreibung

Die Erfindung betrifft einen Kunststoff-Formstoff der im Oberbegriff des Anspruchs 1 genannten Art.

Ein solcher Formstoff ist aus der deutschen Patentschrift DE 21 45 104 C3 als Abschlußplatte zum Verschließen des Bechergehäuses eines elektrischen Kondensators bekannt. Solche Kondensatorabschlußplatten haben Durchmesser im Größenordnungsbereich von ungefähr 2 bis 5 cm, sind also bezüglich ihrer Längenausdehnung relativ kleine Teile. Bei diesen Abmessungen spielen die Unterschiede der linearen Wärmeausdehnungskoeffizienten von Stahl, dem Werkstoff der Formwerkzeuge, in denen der Kunststoff-Formstoff mit der Formmasse zur Herstellung der gummielastischen Teile umspritzt wird, und Kunststoff, dem Material des Formstoffs, eine nur untergeordnete Rolle. Der um das zwei- bis zehnfache größere lineare Wärmeausdehnungskoeffizient von Kunststoffen im Vergleich zum linearen Wärmeausdehnungskoeffizienten von Stahl macht sich dann jedoch bemerkbar, wenn die zu gummierenden Kunststoff-Formstoff-Teile Längenausdehnungen aufweisen, die je nach Art des Kunststoffs, größer oder gleich ungefähr 7 bis 10 cm sind, beispielsweise also beim Gummieren größerer Abschlußplatten und Deckel. Insbesondere dann, wenn in solchen Formstoffen mit größeren Längenausdehnungen relativ weit auseinanderliegende vergleichsweise kleine Durchführungsbohrungen mit elastischen. Dichtungen zu versehen sind, lassen sich diese durch thermisch bedingte Dimensionsungenauigkeiten nicht mehr zufriedenstellend herstellen.

Der Erfindung liegt die Aufgabe zugrunde, das saubere Begrenzen von Einspritzbereichen beim Gummieren von Kunststoff-Formstoffen, insbesondere um zu gummierende Ausnehmungen herum, dahingehend zu verbessern, daß Kunststoff-Formstoffe, insbesondere Platten und Scheiben mit größeren Längenausdehnungen, auch dann zuverlässig gummiert werden können, wenn die linearen Wärmeausdehnungskoeffizienten des Stahls des Formwerkzeugs und des Kunststoffs des Kunststoff-Formstoffs merklich, beispielsweise um den Faktor 10, voneinander abweichen.

Zur Lösung dieser Aufgabe schafft die Erfindung einen Kunststoff-Formstoff, der dadurch gekennzeichnet ist, daß die Hochkante mit Abstand zur Kante der Ausnehmung, der Bohrung oder des Randes des Formstoffs auf der an diese angrenzenden Formstoffoberfläche angeordnet ist.

Der Kunststoff-Formstoff, der im Rahmen der vorliegenden Erfindung in aller Regel ein Spritzgießteil sein wird, kann prinzipiell beliebige Gestalt haben, beispielsweise also ein Block mit Ausnehmungen oder Bohrungen, ein Gehäuse, ein Gehäuseteil oder ein Becher sein. In der Praxis wird der Formstoff jedoch meist eine Scheibe oder Platte sein, die dem Verschluß von Gehäusen oder Behältern dient, die durch die Platte dicht verschlossen werden sollen. Solche Abschlußplatten weisen dann statt separat geformter und eingelegter Gummidichtelemente bequemerweise in Ausnehmungen eingespritzte bzw. angespritzte und anschließend anvulkanisierte Dichtelemente auf, insbesondere auch an Bohrungen an der Platte, die Durchführungszwecken dienen. Durch solche Durchführungen können beispielsweise Stellstangen, Kabel oder, beispielsweise wenn die Platte den Boden eines Wärmetauschers bildet, die Rohre eines Rohrbündels sein. Nicht selten haben solche Formstoffe größte Längenausdehnungen von 10, 20 und mehr Zentimetern bei Durchmessern von Bohrungsöffnungen im Bereich weniger Millimeter und Profildicken der Gummidichtungen im Bereich von größenordnungsmäßig 1 bis 2 mm. Auch unter diesen extremen Bedingungen gewährleistet die Ausgestaltung der Formstoff-Oberfläche mit der mit Abstand um die zu gummierenden Öffnungen und Ränder herum umlaufenden Hochkante einen störungsfreien Ablauf des Gummierungsprozesses und führt zu fehlerfreien Produkten. Selbst dann, wenn nämlich die Öffnung des Angußkanals nicht an der geometrisch vorgesehenen Stelle über dem Bereich der herzustellenden Gummidichtung, sondern durch unterschiedliche thermische Längendehnungen bereits auf der Oberfläche des Formstoffs liegt, ermöglicht die radial weiter außen umschließende Hochkante ein einwandfreies Einfließen der eingedrückten Formmasse in den zur Ausformung des gummielastischen Teils zwischen Formwerkzeug und Formstoff ausgebildeten Hohlraum. Bei der aus dem Stand der Technik bekannten Abdeckscheibe besteht unter diesen Bedingungen die Gefahr, daß die Öffnung des Angußkanals beispielsweise genau auf der Krone der Hochkante liegt und dadurch zumindest teilweise verschlossen wird. Dies würde auf jeden Fall zu fehlerhaften oder fehlenden Gummierungen und damit zur Produktion von Ausschuß Anlaß geben. Dagegen sorgt bei der Erfindung der zwischen dem auf der Krone der umlaufenden Hochkante anliegenden Formwerkzeug und der nach radial innen durch den Abstand zur Öffnung verbleibenden Oberfläche des Formstoffs gebildete flache scheibenförmige Ringraum, der sich in den mit der Formmasse auszufüllenden Hohlraum öffnet, dafür, daß auch bereits über der Oberfläche des Formstoffs eingedrückte und einfließende Formmasse bestimmungsgemäß in die dafür vorgesehenen Formhohlräume einfließen kann. Ausschußproduktion durch thermische Paßungenauigkeiten können damit zuverlässig ausgeschaltet werden.

Im einzelnen wird sich der zum gummierenden Bereich einzuhaltende Abstand der Hochkante nach der Differenz der linearen Wärmeausdehnungskoeffizienten des Werkstoffs des Formwerkzeugs und des Kunststoffs des Formstoffs sowie nach der geometrischen Gestalt und den Längenabmessungen des zu gummierenden Formstoffs richten. Der Fachmann wird dies für jeden speziellen Anwendungsfall meist bereits auch ohne Versuche aus Tabellendaten vorherbestimmen können. Als Regel wird ein Abstand ausreichen, der vorzugsweise zumindest ungefähr und im wesentlichen gleich der Basisbreite des sich zur Krone meist verjüngenden Profils der umlaufenden Hochkante ist oder wenig größer, vorzugsweise bis zu ungefähr drei-, vier-, oder fünfmal größer als diese Profilbasisbreite der Hochkante ist. Der Abstand des Innenrandes der umlaufenden Hochkante von dem Rand oder der Kante der Ausnehmung, Bohrung oder des Randes des Formstoffes, in die hinein oder an den das gummielastische Teil angeformt werden soll, liegt in der Praxis also typischerweise im Bereich von ungefähr 0,05 bis 4 mm, vorzugsweise im Bereich von 0,1 bis 1 mm.

Diese Beabstandung der umlaufenden Hochkante oder Ringrippe vom Rand der auszufüllenden Ausnehmungen des Formstoffs ist vorzugsweise zumindest auf der Angußseite oder den Angußseiten für die herzustellenden gummielastischen Teile ausgebildet. Auch auf Nichtangußseiten kann jedoch eine solche Beabstandung entlang der Trennlinien oder Trennflächen der gummielastischen Teile und der Formstoffkontur dann, und zwar insbesondere dann sinnvoll und zweckmäßig sein, wenn beispielsweise im dort anliegenden Formwerkzeug Profileinzelheiten wie beispielsweise Kanäle oder Rippen oder Noppen ausgebildet sind, die mit der anzubringenden Gummierung zusammenwirken oder auf diese einwirken sollen.

Die Erfindung ist im folgenden anhand eines Ausführungsbeispiels in Verbindung mit der Zeichnung näher erläutert. Dabei zeigt die einzige Figur, nämlich die

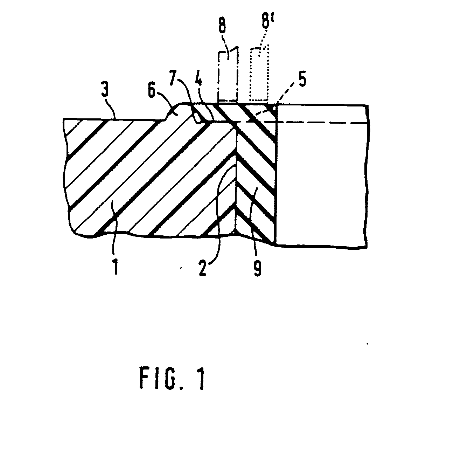

Fig. 1 in stark und nicht maßstäblich vergrößerter schematischer Teildarstellung und im Axialschnitt die Gummierung einer in einem Kunststoffspritzgießteil ausgebildeten Bohrung mit den Merkmalen der Erfindung.

In der Figur ist im nicht maßstäblich stark vergrößerten Axialschnitt ein Teil eines aus glasfaserverstärktem Polyamid bestehenden Kunststoff-Spritzgießteils 1 gezeigt, in dem eine Bohrung 2 senkrecht zur Oberfläche 3 des Spritzgießteils 1 ausgebildet ist. Mit einem radialen Abstand 4 läuft um den Rand 5 der Bohrung 2 in sich geschlossen eine Hochkante 6 um. Die Hochkante 6 weist ein sich von der Basis zur Krone verjüngendes Profil, hier ein halbkreisförmiges Profil mit einer Basisbreite von 0,5 mm und einer Profilhöhe von 0,25 mm auf. Der Abstand 4 vom radial innenliegenden Rand 7 der umlaufenden Hochkante 6 zum Rand 5 der Bohrung 2 beträgt ebenfalls 0,5 mm.

Durch einen in der Figur durch unterbrochene Linien angedeuteten Angußkanal 8 in einem nicht dargestellten Formwerkzeug wird die das gummielastische Teil 9 bildende Formmasse in einen Hohlraum eingedrückt oder eingespritzt, der einerseits zumindest im wesentlichen von der Innenwandfläche der Bohrung 2, andererseits von den Formnestoberflächen weiterhin mit einer punktierten Linie und dem Bezugszeichen 8' die Lage des Angußkanals dargestellt, die der vorgegebenen Soll-Anordnung entspricht. Durch die unterschiedliche lineare Wärmeausdehnung des in der Figur nicht dargestellten Formwerkzeugs und des den wesentlich größeren linearen Wärmeausdehnungskoeffizienten aufweisenden Kunststoffteils 1 ist die tatsächliche Lage des Angußkanals unter Arbeitsbedingungen jedoch die, wie sie durch die Lage des mit unterbrochenen Linien dargestellten Angußkanals 8 angedeutet ist. Dadurch, daß jedoch auch in dieser Ist-Lage der Angußkanal 8 noch nicht teilweise oder ganz durch die Hochkante 6 abgedeckt oder gar verschlossen ist, sondern daß dieser Angußkanal 8 über der Abstandsfläche 4 liegt, kann die durch diesen Angußkanal 8 eingebrachte Formmasse über die auf der verlängerten Oberfläche 3 des Kunststoff-Formteils 1 im Bereich der radialen Abstandsfläche 4 gebildete Ringfläche unbehindert und fehlerfrei unter Ausformung des gummielastischen Teils 9, also der Dichtungsauskleidung der Bohrung 2, in den dafür gebildeten Hohlraum zwischen der Bohrung 2 und dem nicht dargestellten Formwerkzeug einfließen. Trotz der thermischen Paßungenauigkeit werden also durch den Radialabstand 4 einwandfreie Produktionsverhältnisse geschaffen.

Das in der Figur gezeigte Kunststoff-Formteil oder Kunststoffspritzgießteil 1 kann beispielsweise eine große Kondensatorabdeckscheibe, der Deckel eines Akkumulators mit Kontaktdurchführung, die Bodenplatte eines Rohrbündelwärmetauschers, wie er insbesondere im Kraftfahrzeugbaubereich zur Raumklimatisierung benutzt wird, oder der Boden eines Schaltkastens mit wasserdichter Kabeldurchführungsöffnung sein. Gemeinsam ist allen vorstehend beispielhaft aufgeführten Teilen, daß sie relativ große Längenabmessungen haben, über die sich der relativ große lineare Wärmeausdehnungskoeffizient der Kunststoffe relativ zu Stahl, dem Werkstoff der Formwerkzeuge, in denen die Gummidichtungen eingespritzt werden, bei der unter Einspritzbedingungen im Formwerkzeug herrschenden Temperatur signifikant bemerkbar macht.

Der Abstand 4 ist dabei zum Ausgleich dieser Paßungenauigkeiten vorzugsweise zumindest im wesentlichen ungefähr gleich oder größer als die Profilbasisbreite, das heißt, die Breite der umlaufenden Hochkante 6 auf der Ebene der Oberfläche 3 des Formstücks 1. Für kleinere Teile kann der Abstand 4 jedoch auch kleiner gewählt werden. In jedem Fall sollte, wenn der Zweck der Erfindung erreicht werden soll, der Abstand 4 so breit gewählt werden, daß Paßungenauigkeiten bei der relativen Stellung des Angußkanals 8 zum Formstoff 1 nicht dazu führen, daß der Angußkanal ernstlich durch die umlaufende Hochkante 6 verengt oder gar verschlossen wird.

Die dieser Beschreibung beigefügte Zusammenfassung wird als offenbarungswesentlicher Bestandteil der vorliegenden Anmeldungsunterlagen angesehen.

## Patentansprüche

1. Kunststoff-Formstoff (1) mit angeformten oder eingeformten gummielastischen Teilen (9), der um Ausnehmungen, Bohrungen (2) oder Ränder herum, in die hinein oder um die herum die gummielastischen Teile durch Einspritzen, Einpressen oder Eingießen einer Formmasse und anschließen des Vernetzen oder anderweitiges Verfestigen ausgeformt sind, eine in sich geschlossen umlaufende Hochkante (6) oder Ringrippe aufweist, um bei der Bildung der gummielastischen Teile ein Überlaufen der Formmasse auf nicht zu bedeckende Bereiche der Oberfläche (3) des Formstoffes zu vermeiden, dadurch gekennzeichnet, daß die Hochkante (6) mit Abstand (4) zur Kante (5) der Ausnehmung, der Bohrung (2) oder des Randes des Formstoffs (1) auf der an diese angrenzenden Formstoffoberfläche (3) angeordnet ist.

2. Formstoff nach Anspruch 1, dadurch gekennzeichnet, daß der Abstand (4) zumindest gleich oder größer als die Profilbasisbreite der Hochkante (6) ist.

3. Formstoff nach Anspruch 2, dadurch gekennzeichnet, daß der Abstand (4) gleich oder bis zu dreimal größer als die Profilbasisbreite der Hochkante (6) ist.

4. Formstoff nach Anspruch 1, dadurch gekennzeichnet, daß der Abstand (4) zumindest auf der oder den Angußseiten (8) des gummielastischen Teils (9) vorgesehen ist.

## Revendications

1. Pièce de forme (1), en matière plastique, comportant des pièces élastiques (9) en caoutchouc insérées ou formées en surface, qui présente une arête surélevée (6), périphérique, fermée sur elle-même, disposée autour d'évidements, d'alésages (2) ou de bords, à l'intérieur desquels, ou autour desquels les pièces élastiques en caoutchouc 9, sont réalisées par formage par injection, compression ou moulage d'une matière moulable, suivi d'une réticulation ou toute autre stabilisation, pour, lors de la réalisation des pièces élastiques en caoutchouc, éviter un débordement de la matière de moulage sur des zones, qui ne sont pas à recouvrir, de la surface extérieure (3) de la pièce de forme, caractérisée en ce que l'arête surélevée (6) est disposée à distance (4) par rapport au bord (5) de l'évidement, de l'alésage (2) ou de la limite de la pièce de forme (1) sur la surface extérieure (3) de la pièce de forme placée contre cette arête.

2. Pièce de forme suivant la revendication 1, caractérisée en ce que la distance (4) est au moins sensiblement égale à la largeur de la base du profil de l'arête surélevée (6), ou plus grande qu'elle.

3. Pièce de forme suivant la revendication 2, caractérisée en ce que la distance (4) est égale ou jusqu'à trois fois plus grande que la largeur de la base du profil de l'arête surélevée (6).

4. Pièce de forme suivant la revendication 1, caractérisée en ce que la distance (4) est prévue au moins sur la ou les faces d'injection (8) de la pièce élastique en caoutchouc (9).

## Claims

1. A preformed part (1) made of a plastics material with integrally formed rubber-elastic parts (9) comprising a closed protruding raised rib (6) or circularly-closed ring-shaped rib around recesses, bore holes (2) or borders, into which or around which the rubber-elastic parts (9) are formed by injecting, pressing or pouring in a form material followed by interlacing or hardening in some other way, which protruding raised rib is destinated to avoid an overflow of the form material to those portions of the surface (3) of the preformed part not to be coated when the rubber-elastic parts are formed, characterized in that the protruding raised rib (6) is arranged in a predetermined distance (4) with respect to the edge (5) of the recess, the bore hole (5) or the border of the preformed part (1) at that surface portion (3) of the preformed part which portion is adjacent to the edge.

2. A preformed part according to claim 1, characterized in that the distance (4) is at least equal or larger than the width of the base of the protruding raised rib (6).

3. A preformed part according to claim 2, characterized in that the distance (4) is equal or up to three times larger that the width of the base of the protruding raised rib (6).

4. A preformed part according to claim 1, characterized in that the distance (4) is provided at least at those portions of the preformed part where the feed gates (8) for the rubber-elastic part (9) are arranged.

FIG. 1